# EUROPÄISCHE PATENTSCHRIFT

(11) **EP 0 613 414 B1**
(45) Veröffentlichungstag und Bekanntmachung des Hinweises auf die Patenterteilung: **29.05.1996**
(21) Anmeldenummer: 93919322.3
(22) Anmeldetag: 12.09.1993
(51) Int. Cl.: B29C 47/02, C09D 13/00, B43K 19/16

(54) **VERFAHREN UND ANLAGE ZUR HERSTELLUNG VON SCHREIBSTIFTEN**
PROCESS AND PLANT FOR PRODUCING PENCILS
PROCEDE ET INSTALLATION POUR LA FABRICATION DE CRAYONS

(30) Priorität: 15.09.1992 DE 4230793
(43) Veröffentlichungstag der Anmeldung: 07.09.1994
(73) Patentinhaber: BELLAFORM EXTRUSIONSTECHNIK GMBH, D-55218 Ingelheim (DE)
(72) Erfinder: METZGER, Burkhard, D-55218 Ingelheim (DE); ZIOLKOWSKI, Hans, Joachim, D-55218 Ingelheim (DE)
(74) Vertreter: Fuchs, Luderschmidt & Partner Patentanwälte
(86) Internationale Anmeldenummer: EP9302461
(87) Internationale Veröffentlichungsnummer: WO9406615

(56) Entgegenhaltungen:
- DD-A- 121 067
- DE-A- 3 733 060
- DE-C- 3 744 193

## Beschreibung

Die Erfindung betrifft ein Verfahren zur Herstellung von Schreibstiften mit einer festen Schreibmine und mindestens einer Ummantelung, bei dem Polymere als Bindemittel eingesetzt werden und das Minenmaterial und das Ummantelungsmaterial extrudiert werden. Die Erfindung betrifft auch eine Anlage zur Durchführung dieses Verfahrens mit einem Minenextruder und mindestens einen an einen Ummantelungsspritzkopf angeschlossenen Ummantelungsextruder.

An Schreibstifte werden mehrere Anforderungen gestellt, wobei die Gebrauchseigenschaften im wesentlichen von der Qualität der Mine abhängen. Ein Schreibstift muß u.a. gut spitzbar sein, was einerseits durch die Härte des Ummantelungsmaterials und andererseits wegen der angreifenden Torsionskräfte durch die Sprödigkeit der Mine und die Haftung zwischen Mine und Ummantelungsmaterial bestimmt wird. Dickenschwankungen in der Mine machen sich hierbei nachteilig bemerkbar. Weiterhin darf die Mine im Ummantelungsmaterial nicht unterschiedlichen Spannungen unterliegen oder gar bereits Bruchstellen aufweisen, die beim Herstellungsprozeß leicht auftreten können.

Schreibstifte werden heutzutage zunehmend aus Kunststoffen hergestellt, wobei entsprechende Strangprofile extrudiert werden, die anschließend auf Schreibstiftlänge geschnitten werden. Als Bindemittel im Minenmaterial und im Ummantelungsmaterial werden die unterschiedlichsten Polymere, vorzugsweise jedoch SAN- und ABS-Polymere eingesetzt, denen wiederum geeignete Zuschlagsstoffe wie Farbmaterial, Gleit- und Haftstoffe und ggf. Füllstoffe zugesetzt werden.

Obwohl die Eigenschaften der Schreibstifte im wesentlichen durch die verwendeten Materialien bestimmt werden, so hat sich doch gezeigt, daß auch das Herstellungsverfahren auf die Gebrauchseigenschaften von Schreibstiften einen wesentlichen Einfluß haben.

Aus der DE-OS 20 30 578 ist eine Vorrichtung zur Herstellung und/oder Umhüllung von Strangprofilen, insbesondere von Schreibstiften, bekannt. Gemäß einer Ausführungsform wird ein bereits vorgefertigtes Strangprofil wie ein Draht, Seil, Rohr oder dergleichen in die Strangpreßdüse eingeführt, wo die Ummantelung des Strangprofiles erfolgt. Für die Herstellung von Schreibstiften ist dieses Verfahren jedoch nicht geeignet, da vorgefertigte Minen wegen ihrer Bruchempfindlichkeit nur schwer handhabbar sind. Ein weiterer Nachteil besteht darin, daß vorgefertigte Minen dann leicht brechen, wenn sie mit dem heißen Ummantelungsmaterial in Kontakt kommen, weil durch die Temperaturunterschiede zwischen Mine und Ummantelungsmaterial unweigerlich Spannungen im Minenmaterial auftreten.

In der DE-OS 20 30 578 wird auch vorgeschlagen, daß zu umhüllende Strangprofil unmittelbar vor dem Ummanteln zu extrudieren. Die Düse ist derart gestaltet, daß sie gleichzeitig als Dorn für eine zweite Strangpreßdüse dient. Dieses Verfahren hat jedoch den Nachteil, daß die Mine noch plastisch ist, wenn breits die Ummantelung aufextrudiert wird. Wenn der Druck des Ummantelungsmaterials sehr groß ist, tritt eine Deformation der Mine auf. Dies kann nicht nur dazu führen, daß Dickenschwankungen auftreten, sondern auch dazu, daß überhaupt keine Mine mehr erzeugt wird.

Aus der DE-PS 38 27 968 ist ein Verfahren bekannt, bei dem alle Minenkomponenten zunächst auf feine Korngröße gemahlen werden und anschließend in einem Turbomischer gemischt werden. Im Turbormischer ist eine bestimmte Temperaturführung erforderlich, weil die Mischung wiederum gekörnt werden muß, bevor sie dem Extruder zugeführt wird. Im Minenextruder durchläuft die zugeführte Mischung eine Einfüllzone, eine Durchgangszone, eine Kompressionszone und eine Extruderkopfzone, wobei die Temperatur bis zur Extrusionszone ansteigt und am Extruderkopf wieder geringfügig abfällt. Dieses Verfahren ist wegen der Aufbereitung der Minenkomponenten sehr aufwendig und wenig flexibel, wenn beispielsweise die Härte der Mine geändert werden soll.

Aus der DE-AS 22 03 635 ist ein Bleistift mit Kunststoffummantelung bekannt. Die Herstellung der Mine erfolgt in zwei Verfahrensschritten unter Zwischenschaltung eines Trocknungsschrittes. Im ersten Verfahrensschritt wird beispielsweise unter Anwendung eines Mischers ABS-Harz-Pulver, Graphitpulver und Calziumstearat gründlich vermischt. Nach der Trocknung wird das Gemisch bei etwa 170°C unter Anwendung eines Extruders extrudiert und noch heiß zur Bildung des Materials für die Bleistiftkerne geschnitten. Die Ummantelung erfolgt nach dem Verfahren der Ummantelung von Drähten. Drähte sind jedoch vorgefertigt und werden von einer Spule abgewickelt und dann einem Extruder zugeführt. Dies bedeutet, daß der Draht, der im vorliegenden Fall der Mine entsprechen würde, vollständig erkaltet und somit auch vollständig verfestigt vorliegt. Es wird auch erwähnt, daß nach der Extrusion die Mine kontinuierlich in eine Kreuzkopfdüse zwecks Ummantelung eingeführt wird. Dadurch, daß die Mine unmittelbar in den Ummantelungsspritzkopf eingeführt wird, ist diese jedoch noch plastisch und kann somit deformiert werden.

Aus der DE-AS 28 03 206 ist ein verschäumbares Gemisch bekannt, insbesondere für die Ummantelung von Minen. Das Gemisch wird hierfür mit einer Strangpresse ausgepreßt, die mit einem Querspritzkopf versehen ist. In diesem wird gleichzeitig und kontinuierlich die plastische Mine dosiert und mittels einer weiteren Strangpresse herausgedrückt. Das herausgedrückte Sechskantprofil wird kalibriert und nachher auf die entsprechende Länge des klassischen Bleistiftes zugeschnitten. Die Oberfläche der auf diese Art erzeugten Bleistifte kann durch einen Lackanstrich verbessert werden oder es wird ein dreifacher Spritzkopf angewandt und die Oberfläche mit einer dünnen dekorativen Schicht aus einem steifen Kunststoff überzogen. Auch bei diesem bekannten Verfahren wird das plastische Minenmaterial ummantelt, was jedoch erhebliche Nachteile bezüglich Dickenschwankungen mit sich bringt.

Aufgabe der Erfindung ist daher ein Verfahren und eine Vorrichtung, das eine flexible Herstellung von Schreibstiften unterschiedlicher Härte bei geringerem Aufwand ermöglicht, wobei die erzeugten Schreibstifte eine bessere Qualität hinsichtlich Minenbruch und Spitzbarkeit aufweisen sollen.

Diese Aufgabe wird mit einem Verfahren gemäß Anspruch 1 gelöst. Gegenstand der Vorrichtung ist Anspruch 10.

Die Erfindung geht von der Überlegung aus, daß eine größere Flexibilität dann erreicht wird, wenn das polymere Bindemittel und die übrigen Komponenten des Minenmaterials getrennt aufbereitet und dem Extruder zugeführt werden. Die Härte der Mine wird durch die Zuschlagsstoffe wie Farbstoffe, Gleit- und Haftstoffe sowie ggf. Füllstoffen bestimmt. Hierbei handelt es sich um pulverförmige Materialien, die unabhängig vom polymeren Bindemittel gemischt und aufbereitet werden. Wenn auf eine andere Härte der Mine oder eine andere Farbe umgestellt werden soll, so kann unabhängig vom eingesetzten polymeren Bindemittel die Mischung der Zuschlagsstoffe geändert werden. Es können auch mehrere Mischungen bereitgehalten werden, die dann nach Wahl dem bereits aufgeschmolzenen polymeren Bindemittel zugesetzt werden.

Dadurch, daß das polymere Bindemittel bei der Zugabe der pulverförmigen Zuschlagsstoffe bereits aufgeschmolzen ist, wird eine relativ schnelle Durchmischung aller Komponenten erzielt. Nach erfolgter Durchmischung wird das Minenmaterial zu einem Minenprofil extrudiert, das anschließend abgekühlt wird. Wichtig ist hierbei, daß die Abkühlung nur so weit erfolgt, daß das Minenprofil gerade nicht mehr plastisch ist. Dies bietet den Vorteil, daß das Minenprofil beim Aufextrudieren der Ummantelung nicht mehr deformiert werden kann, so daß keine Dickenschwankungen auftreten können. Andererseits ist die Temperatur noch so hoch, daß die Differenz zur Temperatur des aufextrudierten Ummantelungsmaterials keine Spannungen im Minenprofil hervorrufen können. Insbesondere, wenn sowohl für das Minenmaterial als auch für das Ummantelungsmaterial als Bindemittel dieselben Polymere oder ähnliche Polymere eingesetzt werden, die einen etwa gleichen Erweichungsbereich aufweisen, beträgt der Temperaturunterschied nur einige Grad Celsius bis einige 10°C, so daß die Vorteile einer bereits nicht mehr plastischen Mine mit den Vorteilen einer noch auf hoher Temperatur befindlichen Mine kombiniert werden können. Erst nach der Ummantelung und der vollständigen Ausbildung des Schreibstiftprofiles erfolgt die vollständige Abkühlung des Schreibstiftprofils.

Das Aufschmelzen des Bindemittels und das Vermischen mit den pulverförmigen Zuschlagsstoffen wird in einem Extruder durchgeführt, der im Rahmen der Anlage zur Herstellung der Schreibstifte beschrieben wird.

Die Temperatur der Polymerschmelze wird bis zur Zugabe des pulverförmigen Gemisches kontinuierlich erhöht, da eine niedrige Viskosität der Polymerschmelze das Einmischen der pulverförmigen Zuschlagsstoffe erleichtert. Nach der Zugabe der Zuschlagsstoffe wird die Temperatur geringfügig abgesenkt und anschließend wieder bis zur Extrusionstemperatur erhöht, wobei die Temperaturabsenkung nur so weit erfolgt, daß das Bindemittel noch als Schmelze vorliegt. Die Temperatur der Polymerschmelze darf allerdings nicht so weit erhöht werden, daß eine Depolymerisation eintritt.

Es hat sich als vorteilhaft herausgestellt, wenn das Gemisch der Minenmaterialien nach der Zugabe der Zuschlagsstoffe nicht nur mindestens einem Mischvorgang sondern auch mindestens einem Knetzyklus unterworfen wird. Vorzugsweise wird das Gemisch zwei oder drei aufeinanderfolgenden Misch- und Knetzyklen unterworfen, wobei der jeweils nachfolgende Misch- und Knetzyklus bei höherer Temperatur durchgeführt wird.

Damit in der Mine keine Blasen erzeugt werden, die die Stabilität der Mine beeinträchtigen, wird während der Zugabe der Zuschlagsstoffe eine Entgasung durchgeführt. Vorzugsweise wird auch nach dem letzten Misch- und Knetzyklus oder während des letzten Misch- und Knetzyklus eine Entgasung des Minenmaterials durchgeführt.

Je nach Art des gewünschten Schreibstiftes und der geforderten Farbgebung können auf das Minenprofil zwei oder mehr Ummantelungen aufgebracht werden. Vorzugsweise werden zwei Ummantelungen gleichzeitig auf das Minenprofil aufextrudiert, wobei die äußere Ummantelung als dünne Farbschicht ausgebildet wird.

Das Schreibstiftprofil wird unmittelbar nach dem Extrudieren der Ummantelungsmaterialien kalibriert.

Die Anlage zur Durchführung des Verfahrens weist einen Minenextruder auf, der eine erste und eine zweite Beschickungsstation besitzt. Zwischen der ersten und der zweiten Beschickungsstation ist mindestens eine Aufschmelz- und Förderstrecke und hinter der zweiten Beschickungsstation mindestens eine Misch- und Knetstrecke vorgesehen. Zwischen dem Minenextruder und dem Ummantelungsspritzkopf ist eine erste Kühlstrecke und hinter dem Ummantelungsspritzkopf eine zweite Kühlstrecke vorgesehen.

Der Minenextruder ist modular aufgebaut, so daß die einzelnen Aufschmelz-, Förder-, Misch- und Knetstrecken den jeweils eingesetzten Materialien angepaßt werden können.

Die zweite Beschickungsstation ist an einem Beschickungsextruder angeschlossen, der wiederum von einer Dosiereinrichtung, die vorzugsweise eine graphimetrische Dosiereinrichtung ist, gespeist wird. Über die zweite Beschickungsstation werden die pulverförmigen Zuschlagsstoffe den im Extruder befindlichen Polymerschmelzematerial zugeführt. Die Temperaturführung in der oder den Aufheiz- und Förderstrecken zwischen der ersten Beschickungsstation und der zweiten Beschickungsstation ist so gewählt, daß die Temperatur kontinuierlich zwischen der ersten Beschickungsstation und der zweiten Beschickungsstation zunimmt und im Bereich der zweiten Beschickungsstation eine Schmelze der gewünschten Viskosität vorliegt. In die zweite Beschickungsstation ist vorzugsweise eine Entgasungsstation integriert, um bereits in einem frühen Stadium der Aufbereitung des Minenmaterials Gase zu entfernen, die bei der späteren fertigen Mine zur Blasenbildung führen können. Um sicherzustellen, daß die gesamten, im Minenmaterial vorhandenen Gase abgeführt werden können, ist hinter der oder im Bereich der letzten Misch- und Knetstrecke eine zweite Entgasungsstation angeordnet.

Die Kühlstrecke kann unterschiedliche Kühlmedien enthalten. Im Bereich der Kühlstrecke können auch Einrichtungen zum Führen des extrudierten Minenprofils vorgesehen sein. Vorzugsweise ist die Kühlstrecke jedoch lediglich ein Freiraum zwischen dem Minenextruder und dem Ummantelungsspritzkopf. In diesem Freiraum wird das extrudierte Minenprofil freihängend dem Ummantelungsspritzkopf zugeführt, wobei es ausreicht, wenn die Luft in diesem Freiraum auf Raumtemperatur sich befindet. Auf zusätzliche Einrichtungen kann verzichtet werden, wenn die Länge dieser ersten Kühlstrecke in der Weise auf die Abzugsgeschwindigkeit des Minenprofils eingestellt ist, daß die gewünschte Temperaturabsenkung des Minenprofils erzielt wird.

Hinter dem Ummantelungsspritzkopf ist eine Kalibrierstation angeordnet, wobei vorzugsweise die Kalibrierstation zumindest einen Teil der zweiten Kühlstrecke bildet.

Nachfolgend werden beispielhafte Ausführungsformen der Erfindung anhand der Zeichnungen erläutert.

Es zeigen:
- Figur 1: die Draufsicht auf die Anlage,
- Figur 2: einen Teil der Anlage in Seitenansicht und
- Figur 3: den Aufbau des Minenextruders in schematischer Darstellung.

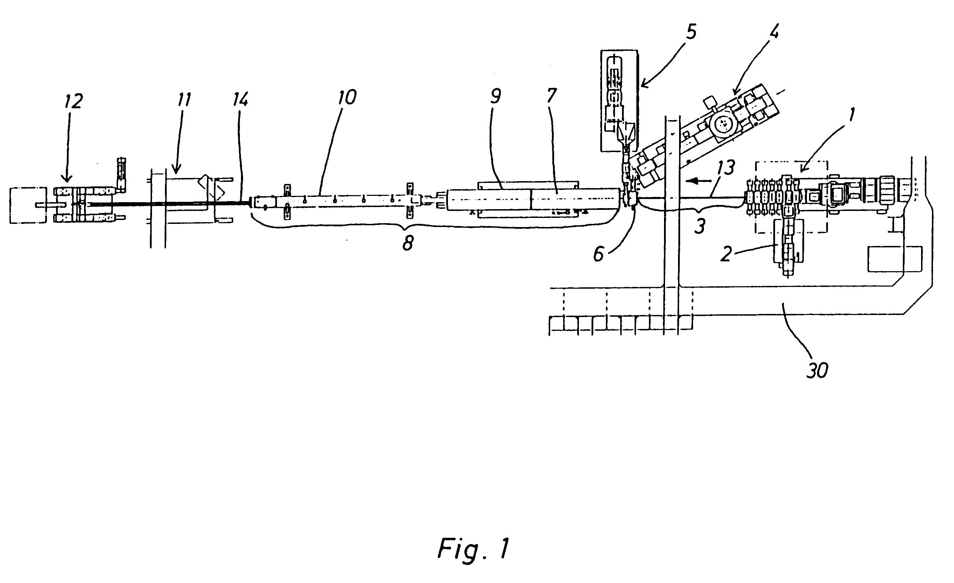

In der Figur 1 ist die Anlage zur Herstellung von Schreibstiften in Draufsicht dargestellt. An den Minenextruder 1 ist seitlich ein Beschickungsextruder 2 für die Zuführung der Zuschlagstoffe zur Polymerschmelze angeflanscht. Das aus dem Mineneztruder extrudierte Minenprofil 13 durchläuft danach eine Kühlstrecke 3 und tritt in den Ummantelungsspritzkopf 6 ein, an den ein erster und ein zweiter Ummantelungsextruder 4, 5 angeschlossen sind. Mit dem Ummantelungsextruder 4 wird das Material für die Minenummantelung dem Ummantelungsspritzkopf 6 zugeführt. Gleichzeitig wird mittels des zweiten Ummantelungsextruders 5 Material für das Aufbringen einer Außenschicht, vorzugsweise einer Farbschicht, dem Ummantelungsspritzkopf 6 zugeführt. Beide Ummantelungsmaterialien werden im Ummantelungsspritzkopf 6 gleichzeitig auf das Minenprofil 13 aufeztrudiert. Die Extrusion erfolgt in der Weise, daß das Schreibstiftprofil 14 unmittelbar hinter dem Ummantelungsspritzkopf 6 in eine Kalibrierstation 7 extrudiert wird, die einen Teil der zweiten Kühlstrecke 8 bildet. Die zweite Kühlstrecke 8 besteht in der hier gezeigten Darstellung aus zwei Kühlwannen 9 und 10, die mit Kühlflüssigkeit, beispielsweise Wasser gefüllt sind. Am Ende der zweiten Kühlwanne 10 befindet sich ein Wasserabstreifer und das Schreibstiftprofil 14 gelangt in die Abzugsstation und danach in eine Sägestation 12, wo eine mitlaufende Säge zum Abtrennen der einzelnen Schreibstifte vom Schreibstiftprofil 14 angeordnet ist. Sowohl der Minenextruder 1 als auch die Ummantelungsextruder 4, 5 und die Abzugsstation 11 sind an eine gemeinsame Schaltstation 30 angeschlossen.

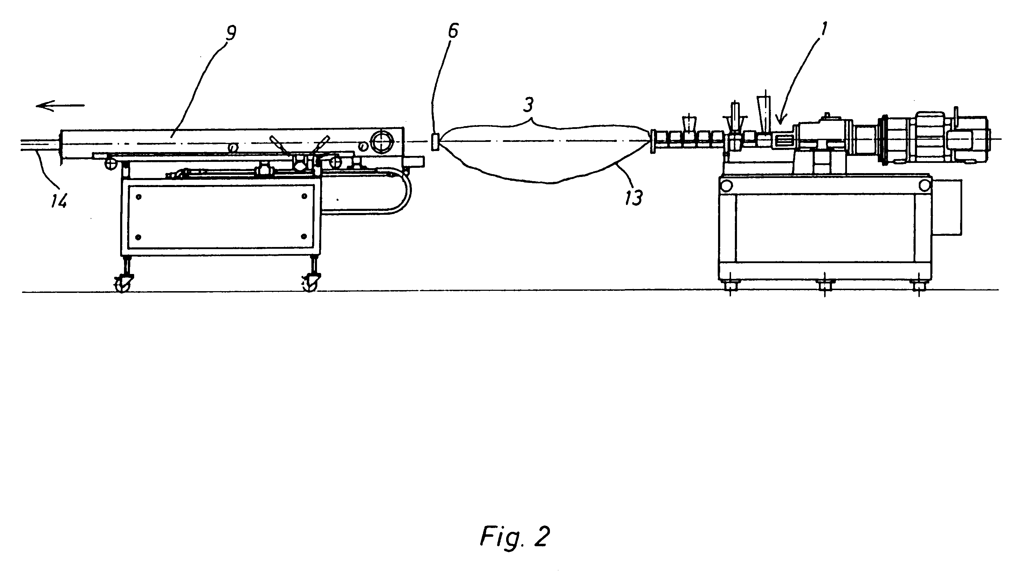

In der Figur 2 ist der vordere Teil der Anlage in Seitenansicht dargestellt. Die erste Kühlstrecke 3 besteht aus einem Freiraum zwischen dem Minenextruder 1 und dem Ummantelungsspritzkopf 6, in dem das extrudierte Minenprofil 13 freihängend dem Ummantelungsspritzkopf 6 zugeführt wird. Das extrudierte Minenprofil 13 weist eine so große Stabilität auf, daß es in dieser ersten Kühlstrecke 3 nicht reißt. Diese erste Kühlstrecke ermöglicht auch eine opitsche Kontrolle des extrudierten Minenprofils 13. Am Ende der ersten Kühlstrecke 3 ist das Minenprofil 13 so weit abgekühlt, daß es bei Eintritt in den Ummantelungsspritzkopf nicht mehr plastisch ist. Wenn die Länge der ersten Kühlstrecke entsprechend auf die Abzugsgeschwindigkeit des Minenprofils 13 abgestimmt ist, reicht es auch, wenn die Umgebungsluft in diesem Freiraum der Kühlstrecke 3 sich auf Raumtemperatur befindet.

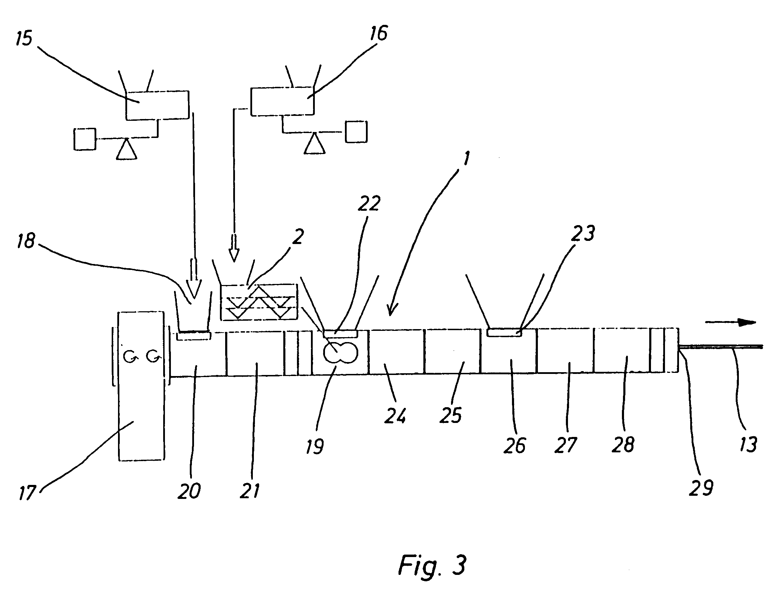

In Figur 3 ist der Minenextruder schematisch dargestellt. Bei dem Minenextruder 1 handelt es sich um einen Doppelschneckenextruder, der verschiedene Streckenabschnitte und Stationen aufweist, die modular zusammengestellt werden können. Benachbart dem Antrieb 17 ist eine erste Beschickungsstation 18 angeordnet, über die aus einer ersten Dosiereinrichtung 15, die eine gravimetrische Dosiereinrichtung sein kann, das polymere Bindemittel dem Minenextruder 1 zugeführt wird. Im Bereich der ersten Beschickungsstation 18 ist eine erste Aufschmelz- und Förderstrecke 20 vorgesehen, die das angelieferte Polymermaterial über die Erweichungstemperatur erhitzt und einer zweiten Aufschmelz- und Förderstrecke 21 zuführt, wo eine weitere Aufschmelzung des Polymermaterial erfolgt. Danach gelangt das auf eine hohe Temperatur aufgeheizte Polymermaterial in die zweite Beschickungsstation 19, wo die Zuschlagsstoffe, wie z.B. Graphit, Haft- und Gleitstoffe sowie ggf. Füllstoffe als pulverförmiges Gemisch aus einer gravimetrischen zweiten Dosiereinrichtung 16 zugeführt wird. Im Bereich der zweiten Beschickungsstation 19 ist ebenfalls eine Aufheiz- und Förderstrecke vorgesehen, die mit einer ersten Entgasungsstation 22 versehen ist. An die zweite Beschickungsstation 19 schließen sich insgesamt drei Misch- und Knetstrecken 24, 25 und 26 an, wobei die dritte Misch- und Knetstrecke eine zweite Entgasungsstation 23 aufweist. An die zweite Entgasungsstation 23 schließt sich eine Förderstrecke 27 sowie die Verdichtungsstrecke 28 an, die am Extruderkopf 29 endet, aus dem das Minenprofil 13 extrudiert wird.

Auf dieser Anlage können Schreibstifte hergestellt werden, die beispielsweise als Bindemittel Polystyrol enthalten. Das Polystyrol, das etwa 10 bis 40 Gew.-% des Minenmaterial ausmacht, wird als Granulat der ersten Beschickungsstation zugeführt und dort auf dem Weg zur zweiten Beschickungsstation auf etwa 240°C aufgeheizt. Über die zweite Beschickungsstation wird ein Gemisch aus pulverförmigem Graphit, das 50 bis 70 Gew.-% des Minenmaterial ausmacht, sowie Stearinsäure und Calciumstearat mit Anteilen von 2 bis 5 Gew.-% bzw. 2 bis 10 Gew.-% zugeführt. Die Temperatur in den anschließenden Misch- und Knetstrecken 24 bis 26 beträgt 190 bis 200°C. Diese Temperatur wird dann im Bereich der Förderstrecke 27 sowie der Verdichtungsstrecke 28 aufrechterhalten und das Minenmaterial am Extruderkopf 29 mit etwa dieser Temperatur extrudiert. Im Bereich der ersten Kühlstrecke 3 erfolgt dann eine Abkühlung auf etwa 190°C, eine Temperatur bei der das Minenmaterial sich bereits so weit verfestigt hat, daß es beim Eintritt in den Ummantelungsspritzkopf 6 nicht mehr deformiert werden kann. Als Ummantelungsmaterial kann ebenfalls Polystyrol als Bindemittel eingesetzt werden, das einen Anteil von 60 bis 70 Gew.-% ausmacht. Das Ummantelungsmaterial kann weiterhin noch 30 bis 40 Gew.-% talkumgefülltes LDPE sowie Farbbatches und Treibmittel aufweisen. Die Außenschicht, die ebenfalls im Ummantelungsspritzkopf 6 aufextrudiert wird, kann ebenfalls Polystyrol aufweisen, das einen Anteil von über 50 Gew.-% ausmacht. Zusätzlich enthält das Material für die Außenschicht noch Farbbatches, so daß eine farbliche Ausgestaltung des Schreibstiftes möglich ist.

Das Anfahren der Anlage erfolgt in der Weise, daß zunächst mit der Extrusion der Ummantelung begonnen wird und dann erst die Minenextrusion erfolgt. Der Anfang des Minenprofils wird dann in den Ummantelungsspritzkopf eingeführt und von dem extrudierten Ummantelungsmaterial erfaßt und mitgezogen.

Eine beispielhafte Temperaturführung für Minenmaterialien, die als Bindemittel Polystyrol aufweisen, ist aus der nachfolgenden Tabelle zu entnehmen.

**Tabelle**

| | | °C |
|---|---|---|
| 1. | Aufschmelz- und Förderstrecke (20) | 140 - 180 |
| 2. | Aufschmelz- und Förderstrecke (21) | 160 - 220 |
| 2. | Beschickungsstation (19) | 140 - 240 |
| 1. | Misch- und Knetstrecke (24) | 150 - 190 |
| 2. | Misch- und Knetstrecke (25) | 150 - 200 |
| 3. | Misch- und Knetstrecke (26) | 160 - 200 |
| | Förderstrecke (27) | 150 - 200 |
| | Verdichtungsstrecke (28) | 150 - 200 |
| | Ende der 1. Kühlstrecke (3) | 140 - 190 |

### Bezugszeichenliste:

- 1: Minenextruder
- 2: Beschichtungseztruder
- 3: erste Kühlstrecke
- 4: erster Ummantelungsextruder
- 5: zweiter Ummantelungsextruder
- 6: Ummantelungsspritzkopf
- 7: Kalibrierstation
- 8: zweite Kühlstrecke
- 9: erste Kühlwanne
- 10: zweite Kühlwanne
- 11: Abzugsstation
- 12: Sägestation
- 13: Minenprofil
- 14: Schreibstiftprofil
- 15: erste Dosiereinrichtung
- 16: zweite Dosiereinrichtung
- 17: Antrieb
- 18: erste Beschickungsstation
- 19: zweite Beschickungsstatin
- 20: erste Aufschmelz- und
Förderstrecke
- 21: zweite Aufschmelz- und
Förderstrecke
- 22: erste Entgasungsstation
- 23: zweite Entgasungsstation
- 24: erste Misch- und Knetstrecke
- 25: zweite Misch- und Knetstrecke
- 26: dritte Misch- und Knetstrecke
- 27: Förderstrecke
- 28: Verdichtungsstrecke
- 29: Extruderkopf
- 30: Schalteinrichtung

## Patentansprüche

1. Verfahren zur Herstellung von Schreibstiften mit einer festen Schreibmine und mindestens einer Ummantelung, bei dem Polymere als Bindemittel eingesetzt werden und das Minenmaterial und das Ummantelungsmaterial extrudiert werden, dadurch gekennzeichnet,
daß zur Herstellung der Mine zunächst das polymere Bindemittel aufgeschmolzen wird,
daß dann der Polymerschmelze ein pulverförmiges Gemisch aus an sich bekannten Zuschlagsstoffen wie Farbstoffen, Gleit- und Haftstoffen und ggf. Füllstoffen zugegeben wird, wobei das Aufschmelzen des Bindemittels und das Vermischen mit den pulverförmigen Zuschlagstoffen in einem Extruder durchgeführt wird,
daß nach intensiver Vermischung der Polymerschmelze mit den Zuschlagsstoffen das Minenmaterial zu einem Minenprofil extrudiert wird,
daß das erhaltene Minenprofil anschließend nur so weit abgekühlt wird, daß das Minenprofil gerade nicht mehr plastisch ist,
daß auf das abgekühlte aber noch nicht erkaltete Minenprofil das Ummantelungsmaterial zur Ausbildung des Schreibstiftprofils extrudiert wird und
daß danach das Schreibstiftprofil vollständig abgekühlt wird.

2. Verfahren nach Anspruch 1, dadurch gekennzeichnet, daß die Temperatur der Polymerschmelze bis zur Zugabe des pulverförmigen Gemisches der Zugschlagsstoffe kontinuierlich erhöht wird, nach der Zugabe der Zuschlagsstoffe abgesenkt und anschließend wieder bis zur Extrusionstemperatur erhöht wird, wobei die Temperaturabsenkung nur so weit erfolgt, daß das Bindemittel noch als Schmelze vorliegt.

3. Verfahren nach einem der Ansprüche 1 oder 2, dadurch gekennzeichnet, daß das Gemisch nach der Zugabe der Zuschlagsstoffe mindestens einem Misch- und Knetzyklus unterworfen wird.

4. Verfahren nach Anspruch 3, dadurch gekennzeichnet, daß das Gemisch mindestens zwei aufeinanderfolgenden Misch- und Knetzyklen unterworfen wird, wobei der jeweils nachfolgende Misch- und Knetzyklus bei höherer Temperatur durchgeführt wird als der vorhergehende Misch- und Knetzyklus.

5. Verfahren nach einem der Ansprüche 1 bis 4, dadurch gekennzeichnet, daß während der Zugabe der Zugschlagsstoffe eine Entgasung durchgeführt wird.

6. Verfahren nach einem der Ansprüche 1 bis 5, dadurch gekennzeichnet, daß nach dem letzten Misch- und Knetzyklus eine Entgasung durchgeführt wird.

7. Verfahren nach einem der Ansprüche 1 bis 6, dadurch gekennzeichnet, daß zwei Ummantelungen gleichzeitig auf das Minenprofil aufextrudiert werden, wovon die äußere Ummantelung als dünne Farbschicht ausgebildet wird.

8. Verfahren nach einem der Ansprüche 1 bis 7, dadurch gekennzeichnet, daß das Schreibstiftprofil unmittelbar nach der Extrusion des Ummantelungsmaterials kalibriert wird.

9. Verfahren nach Anspruch 8, dadurch gekennzeichnet, daß beim Kalibrieren das Schreibstiftprofil gekühlt wird.

10. Anlage zur Durchführung des Verfahrens nach Anspruch 1 mit einem Minenextruder und mindestens einem an einen Ummantelungsspritzkopf angeschlossenen Ummantelungsextruder, dadurch gekennzeichnet,
daß der Minenextruder (1) eine erste Beschickungsstation (18) und eine zweite Beschickungsstation (19) aufweist, wobei zwischen der ersten und der zweiten Beschickungsstation (18, 19) mindestens eine Aufschmelz- und Förderstrecke (20, 21) und hinter der zweiten Beschickungsstation (19) mindestens eine Misch- und Knetstrecke (24, 25, 26) angeordnet ist,
daß zwischen dem Minenextruder (1) und dem Ummantelungsspritzkopf (16) eine erste Kühlstrecke (3) und hinter dem Ummantelungsspritzkopf (6) eine zweite Kühlstrecke (8) vorgesehen ist.

11. Anlage nach Anspruch 10, dadurch gekennzeichnet, daß die zweite Beschickungsstation (19) an einen Beschickungsextruder (2) angeschlossen ist.

12. Anlage nach Anspruch 10 oder 11, dadurch gekennzeichnet, daß in die zweite Beschickungsstation eine erste Entgasungsstation (22) integriert ist.

13. Anlage nach einem der Ansprüche 10 bis 12, dadurch gekennzeichnet, daß hinter der ersten Entgasungsstation (22) und der mindestens einen Misch- und Knetstrecke (24 bis 26) eine zweite Entgasungsstation (23) angeordnet ist.

14. Anlage nach einem der Ansprüche 10 bis 13, dadurch gekennzeichnet, daß hinter dem Ummantelungsspritzkopf eine Kalibrierstation (7) angeordnet ist.

15. Anlage nach Anspruch 14, dadurch gekennzeichnet, daß die Kalibrierstation (7) zumindest einen Teil der zweiten Kühlstrecke (8) bildet.

## Claims

1. Method of manufacturing pencils with a firm lead and at least one casing, with which polymers are used as binding agents and the lead material and the casing material are extruded, characterized in that,
for manufacturing the lead, the polymeric binding agent is first of all melted,
in that then a powdered mixture of additives, which are known per se, such as colouring substances, lubricants and adhesives and possibly fillers, are added to the polymeric molten mass, the melting of the binding agent and the intermixing with the powdered additives being carried out in an extruder,
in that, after intensive intermixing of the polymeric molten mass with the additives, the lead material is extruded to form a lead profile,
in that the lead profile obtained is then cooled down only to the extent that the lead profile is just no longer plastic,
in that the casing material for forming the pencil profile is extruded on to the lead profile which has been cooled down but which is not yet cold, and
in that the pencil profile is then completely cooled down.

2. Method according to Claim 1, characterized in that the temperature of the polymeric molten mass is continuously increased until the addition of the powdered mixture of additives, is reduced after the addition of the additives and is then increased again up to the extrusion temperature, the temperature only being reduced to the extent that the binding agent is still in molten form.

3. Method according to one of Claims 1 or 2, characterized in that the mixture is subjected to at least one mixing and kneading cycle after the addition of the additives.

4. Method according to Claim 3, characterized in that the mixture is subjected to at least two successive mixing and kneading cycles, each successive mixing and kneading cycle being carried out at a higher temperature than the preceding mixing and kneading cycle.

5. Method according to one of Claims 1 to 4, characterized in that a degasification is carried out during the addition of the additives.

6. Method according to one of Claims 1 to 5, characterized in that a degasification is carried out after the last mixing and kneading cycle.

7. Method according to one of Claims 1 to 6, characterized in that two casings are simultaneously extruded on to the lead profile, the outer casing of which takes the form of a thin layer of colour.

8. Method according to one of Claims 1 to 7, characterized in that the pencil profile is calibrated immediately after the extrusion of the casing material.

9. Method according to Claim 8, characterized in that the pencil profile is cooled down during calibration.

10. Equipment for carrying out the method according to Claim 1 having a lead extruder and at least one casing extruder connected to a casing extrusion head, characterized in that
the lead extruder (1) has a first charging station (18) and a second charging station (19), at least one melting and conveying section (20, 21) being located between the first and the second charging stations (18, 19) and at least one mixing and kneading section (24, 25, 26) being located after the second charging station (19),
in that a first cooling section (3) is provided between the lead extruder (1) and the casing extrusion head (16) and a second cooling section (8) is provided after the casing extrusion bead (6).

11. Equipment according to Claim 10, characterized in that the second charging station (19) is connected to a charging extruder (2).

12. Equipment according to Claim 10 or 11, characterized in that a first degasifying station (22) is integrated into the second charging station.

13. Equipment according to one of Claims 10 to 12, characterized in that a second degasifying station (23) is located after the first degasifying station (22) and after the mixing and kneading section (24 to 26) of which there is at least one.

14. Equipment according to one of Claims 10 to 13, characterized in that a calibrating station (7) is located after the casing extrusion head.

15. Equipment according to Claim 14, characterized in that the calibrating station (7) forms at least a part of the second cooling section (8).

## Revendications

1. Procédé pour fabriquer des crayons comportant une mine et au moins une gaine, selon lequel on utilise des polymères en tant que liant et on extrude le matériau de la mine et le matériau de la gaine, caractérisé en ce que pour fabriquer la mine, on fait fondre tout d'abord le liant formé des polymères,
qu'ensuite, on ajoute à la masse fondue des polymères un mélange pulvérulent formé d'additifs connus en soi tels que des colorants, des substances favorisant le glissement et l'adhérence ou éventuellement des matières de remplissage, la fusion du liant et le mélange aux additifs pulvérulents étant exécutée dans une extrudeuse,
qu'après un mélange intensif de la masse fondue des polymères et des additifs, on extrude le matériau de la mine pour former un profilé de mine,
qu'on refroidit ensuite le profilé de mine obtenu seulement au point que le profilé de mine ne soit précisément plus plastique,
qu'on extrude sur le profilé de mine refroidi, mais pas encore froid, le matériau de la gaine pour former le profilé du crayon, et
qu'ensuite, on refroidit complètement le profilé du crayon.

2. Procédé selon la revendication 1, caractérisé en ce qu'on augmente continûment la température de la masse fondue des polymères jusqu'à l'addition du mélange pulvérulent des additifs, qu'on la réduit après l'ajonction des additifs et qu'ensuite on l'augmente à nouveau jusqu'à la température d'extrusion, la réduction de la température s'effectuant seulement au point que le liant soit encore présent en tant que masse fondue.

3. Procédé selon l'une des revendications 1 ou 2, caractérisé en ce qu'après l'adjonction des additifs, on soumet le mélange à au moins un cycle de mélange et de malaxage.

4. Procédé selon la revendication 3, caractérisé en ce qu'on soumet le mélange au moins à deux cycles successifs de mélange et de malaxage, le cycle respectivement successif de mélange et de malaxage étant exécuté à des températures plus élevées que pour le cycle précédent de mélange et de malaxage.

5. Procédé selon l'une des revendications 1 à 4, caractérisé en ce que pendant l'adjonction des additifs, on exécute un dégazage.

6. Procédé selon l'une des revendications 1 à 5, caractérisé en ce qu'après le dernier cycle de mélange et de malaxage, on exécute un dégazage.

7. Procédé selon l'une des revendications 1 à 6, caractérisé en ce qu'on extrude simultanément deux gaines sur le profilé de mine, la gaine extérieure étant formée sous la forme d'une couche colorée mince.

8. Procédé selon l'une des revendications 1 à 7, caractérisé en ce qu'on calibre le profilé du crayon directement après l'extrusion du matériau de la gaine.

9. Procédé selon la revendication 8, caractérisé en ce que lors du calibrage, on refroidit le profilé du crayon.

10. Installation pour la mise en oeuvre du procédé selon la revendication 1, comportant une extrudeuse pour la mine et au moins une extrudeuse pour la gaine, raccordée à une tête de moulage par injection de la gaine, caractérisée en ce
que l'extrudeuse (1) pour la mine possède un premier poste de chargement (18) et un second poste de chargement (19), au moins une section de fusion et de convoyage (20,21) étant disposée entre les premier et second postes de chargement (18,19), tandis qu'au moins une section de mélange et de malaxage (25,26) est disposée en aval du second poste de chargement (19),
qu'une première section de refroidissement (3) est disposée entre l'extrudeuse (1) pour la mine et la tête (6) de moulage par injection de la gaine et qu'une seconde section de refroidissement (8) est prévue en aval de la tête (6) de moulage par injection de la gaine.

11. Installation selon la revendication 10, caractérisée en ce que le second poste de chargement (19) est raccordé à une extrudeuse de chargement (2).

12. Installation selon la revendication 10 ou 11, caractérisée en ce qu'un premier poste de dégazage (22) est intégré dans le second poste de chargement.

13. Installation selon l'une des revendications 10 à 12, caractérisée en ce qu'un second poste de dégazage (23) est disposé entre le premier poste de dégazage (22) et la au moins une section de mélange et de malaxage (24 à 26).

14. Installation selon l'une des revendications 10 à 13, caractérisée en ce qu'un poste de calibrage (7) est disposé en aval de la tête de moulage par injection de la gaine.

15. Installation selon la revendication 14, caractérisée en ce que le poste de calibrage (7) forme au moins une partie de la seconde section de refroidissement (8).
